(19) Europäisches Patentamt
European Patent Office
Office européen des brevets

(11) EP 2 847 811 B1

(12) **EUROPEAN PATENT SPECIFICATION**

(45) Date of publication and mention of the grant of the patent:
**27.03.2024 Bulletin 2024/13**

(21) Application number: **13723376.3**

(22) Date of filing: **08.05.2013**

(51) International Patent Classification (IPC):
***H01M 50/202*** *(2021.01)* ***H01M 50/227*** *(2021.01)*
***H01M 50/24*** *(2021.01)* ***H01M 50/249*** *(2021.01)*
***H01M 50/264*** *(2021.01)* *H01M 50/103 (2021.01)*
*H01M 10/0525 (2010.01)*

(52) Cooperative Patent Classification (CPC):
**H01M 50/24; H01M 50/202; H01M 50/227; H01M 50/249; H01M 50/264;** H01M 10/0525; H01M 50/103; H01M 2220/20; Y02E 60/10

(86) International application number:
**PCT/US2013/040059**

(87) International publication number:
**WO 2013/169847 (14.11.2013 Gazette 2013/46)**

# (54) MULTIPLE PIECE BATTERY CELL ISOLATOR

MEHRTEILIGER BATTERIEZELLENISOLATOR

ISOLATEUR DE CELLULE DE BATTERIE EN PLUSIEURS PIÈCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2012 US 201261644097 P**
**11.09.2012 US 201213609474**

(43) Date of publication of application:
**18.03.2015 Bulletin 2015/12**

(73) Proprietor: **Robert Bosch Battery Systems LLC**
**Orion, Michigan 48359 (US)**

(72) Inventor: **MILLON, Christopher M.**
**Grand Blanc, Michigan 48439 (US)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**CN-C- 100 344 012**
**JP-A- 2012 069 337**
**US-A- 5 543 248**
**US-A- 5 704 803**
**US-A1- 2009 208 835**

EP 2 847 811 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD

The present invention relates to battery modules for vehicles and more particularly to isolators for prismatic cells.

BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Hybrid electric vehicles (HEVs), plug-in HEVs, and other types of electric vehicles (EVs) use multiple propulsion systems to provide motive power. The propulsion systems may include electric or battery powered systems that receive power from one or more battery modules. A battery module may include, for example, one or more banks of high-voltage cells (or batteries), such as lithium ion cells. The cells are volumetric building blocks of the battery module.

US 5 704 803 A describes a battery pack consisting of the upper half and lower half which can be joined to each other, wherein the upper half comprises an elastic rubber gasket which is integrally molded into the upper half.

CN 100 344 012 C describes a battery cartridge comprising an insulating housing, generally cylindrical in shape, equipped with a housing space and a fixing member.

US 2009/0208835 A1 describes a battery pack including a battery and a covering member, wherein the battery includes a battery device and a battery casing, wherein the battery casing is electrically connected to one of electrodes and the covering member includes a conductive film and a pair of insulating films, wherein the conductive film is electrically connected to another one of the electrodes and the pair of insulating films are arranged opposite to each other through the conductive film.

US 5 543 248 A describes a battery shield for a storage battery including first and second members which are dimensioned to fit around the battery, forming a shield structure, that is open at its top and encloses the battery on all four sides and on the bottom, forming a heat shield for protecting the battery from hot temperatures, the first and second members being hinged to a common base and adapted to be pivoted about respective hinges outwardly away from another to an open position to facilitate installation of a battery in the shield and to then be moved upwardly and toward one another, in the manner of a "clamshell", to a closed position for enclosing the battery within the battery shield.

JP 2012 069337 A describes a battery module including a battery cell having an electrode terminal formed on a first surface, a first holding body that surrounds and holds the battery cell while a hole through which the electrode terminal passes is formed, and a second holding body having a predetermined space and detachably connected to the first holding body on a side opposite to the electrode terminal of the battery cell.

JP 2006 120419 A describes a film-armored power storage device with an electrode unit having a cathode and an anode, a case, an outer package film covering an outside face of the case, and barrier members.

US 2011/0195301 A1 describes a prismatic cell including a prismatic outer can having an opening at the top thereof; a sealing body for sealing the opening; and positive and negative electrode external terminals that are protruded from and insulated from the sealing body, wherein the prismatic outer can is covered on the side surfaces and entire bottom with a piece of folded insulation sheet.

US 2010/0323238 A1 describes a secondary battery including a battery cell in a pack; a metallic battery can in which one opening from which the battery cell is inserted is formed and which accommodates the battery cell therein such that one side face from which the positive electrode terminal and the negative electrode terminal are lead out is faced towards the opening side; and a lid made of a synthetic resin in which a positive electrode terminal part and a negative electrode terminal part to be connected to the electrodes of the electronic appliance.

US 2011/318635 A1 describes a contoured battery for implantable medical devices.

US2005208345A1 teaches in fig. 5 or 6 a battery cell with two labels attached sides to the cell on its opposite sides, whereby an adhesive can be used. Each of the labels is attached to three adjacent sides of the cell can.

SUMMARY

The present invention provides a battery assembly according to claim 1.

In further features, the first and second pieces are formed from polypropylene.

In other features, the first piece further includes a seventh wall member that directly contacts the bottom surface.

In still other features, the seventh wall member is perpendicular to the first, second, and third wall members.

In further features, the first piece further includes an eighth wall member that directly contacts a portion of the top surface.

In still further features, the eighth wall member is perpendicular to the first, second, and third wall members.

In other features, the second piece further includes a ninth wall member that directly contacts a second portion of the top surface.

In still other features, the ninth wall member further directly contacts a portion of the eighth wall member.

In further features, the second piece further includes a tenth wall member that directly contacts an exterior surface of the seventh wall member.

In still further features, the tenth wall member is perpendicular to the fourth, fifth, and sixth wall members.

In other features, the ninth wall member is perpendicular to the fourth, fifth, and sixth wall members. In an example, the first piece is fixed to the lithium ion cell by an interference fit.

In an example, the second piece is fixed to the lithium ion cell and to the first portion by an interference fit.

In still further features, an adhesive fixes the second piece of the cell isolator to the can housing of the lithium ion cell and the first piece of the cell isolator.

In an example, the second portion of the cell isolator is welded to the first portion of the cell isolator.

In an example, thicknesses of the first and second portions are greater than one-half of a predetermined maximum particle dimension.

In still further features, the housing of the lithium ion cell is electrically connected to the positive terminal.

In other features, the housing of the lithium ion cell is electrically connected to the negative terminal.

In an example, the housing of the lithium ion cell is not electrically connected to the positive terminal or the negative terminal.

Further areas of applicability of the present disclosure will become apparent from the detailed description provided hereinafter. It should be understood that the detailed description and specific examples are intended for purposes of illustration only and are not intended to limit the scope of the disclosure.

## BRIEF DESCRIPTION OF THE DRAWINGS

The present disclosure will become more fully understood from the detailed description and the accompanying drawings, wherein:

FIG. 1 is a perspective view of a prismatic cell;

FIG. 2 is a perspective view of the prismatic cell with example pieces of a cell isolator; and

FIGs. 3A and 3B include front and back perspective views of the prismatic cell and the cell isolator.

## DETAILED DESCRIPTION

In the following description, a cell isolator for prismatic cells of a battery module is disclosed. The cell isolator is shown and described as an example, and one or more characteristics of the cell isolator may be modified. For example, the cell isolator may be modified to accommodate cells having a different size and/or shape. Other examples of how the cell isolator can be modified are discussed further below. One cell isolator is provided for each cell of a battery module. The cell isolators aid in electrically isolating cells from each other, from other system components, and from external contact, for example, during battery module assembly.

In FIG. 1, a perspective view of a prismatic cell (hereafter "cell") 100 is shown. The cell 100 may include, for example, a rectangular shaped, lithium-ion cell with a housing (or can) 104. As an example, the housing 104 may be formed of aluminum or another (electrically) conductive material. While only a rectangular shaped cell is shown and discussed, the cell 100 may be another shape.

The cell 100 further includes a pair of terminals 108 that extend from the cell 100. The terminals 108 may include, for example, cylindrical terminals, threaded terminals, flat terminals, or another suitable type of terminal. The cell 100 may be charged and electrical energy may be drawn from the cell 100 via the terminals 108. A positive one of the terminals 108 may be connected to the (electrically conductive) housing 104. In this manner, a reference potential (voltage) of the housing 104 may be approximately equal to the reference potential at the positive one of the terminals 108. In various implementations, a negative one of the terminals 108 may be connected to the housing 104 or neither of the terminals 108 may be connected to the housing 104.

The housing 104 includes a top surface 116 and a bottom surface 120. The housing 104 has a height 124, a length 128, and a width 132. The housing 104 includes first and second surfaces 136 and 140 and includes third and fourth surfaces 144 and 148. Dimensions of the height 124, the length 128, the width 132, and the surfaces 136-148 are shown as examples only, and the dimensions of one or more of the height 124, the length 128, the width 132, and the surfaces 136-148 may be different.

The terminals 108 of the cell 100 and the terminals of one or more other cells can be connected in series, in parallel, or combinations thereof to form a battery module. One or more battery modules may be electrically connected in series, in parallel, or combinations thereof to form a battery pack, which may also be referred to as a cassette. One or more battery packs may be electrically connected in series, in parallel, or combinations thereof, and so on.

Because the housings of each cell may be electrically conductive and at approximately the same reference potential as their positive terminals, respectively, the housing of each cell is electrically insulated/isolated. FIG. 2 includes an example perspective view of the cell 100 with a first piece 204 of a cell isolator (200) and a second piece 208 of the cell isolator (200). FIG. 3 includes front and back perspective views of the cell 100 within the cell isolator (200). While the cell isolator (200) is shown and will be discussed as being a two-piece construction, the cell isolator (200) may be constructed of two or more individual isolator pieces.

Referring now to FIGs. 2 and 3, the first piece 204 of the cell isolator (200) is formed to the shape of a first portion of the housing 104. The second piece 208 of the cell isolator (200) is formed to a second portion of the housing 104 and a piece of the first piece 204. For example, as shown in FIG. 2, the first piece 204 of the cell isolator (200) may be formed such that inner surfaces 212 of the first piece 204 will abut the first surface 136, the third surface 144, and the fourth surface 148 of the housing 104. The second piece 208 of the cell isolator (200) may be formed such that inner surfaces 216 of the second piece 208 will abut the second surface 140 of the housing 104 and exterior surfaces 220 of the first piece 204 of the cell isolator (200).

The first and second pieces 204 and 208 of the cell isolator (200) are formed from an electrically nonconductive material. The first and second pieces 204 and 208 of the cell isolator (200) may be formed from polypropelene, Formex, Formex GK. For example only, the first and second pieces 204 and 208 may be formed from Formex GK-5, Formex GK-10, Formex GK-17, for Formex GK with another suitable thickness. In various implementations, the first and second pieces 204 and 208 may be formed of another suitable material that has at least a predetermined dielectric strength and that satisfies at least a predetermined flame classification (e.g., UL 94V-0), such as another type of polypropelene (PPE). The first and second pieces 204 and 208 may be formed to their respective shapes, for example, via thermoforming (e.g., pressure or vacuum), injection molding, blow molding, or rotational molding.

A thickness of each of the first and second pieces 204 and 208 satisfies the relationship:

$$T \geq \frac{MaxParticleSize}{2},$$

where T is the thickness (e.g., in millimeters or fractions of an inch) of each of the first and second pieces 204 and 208 and MaxParticleSize is a maximum dimension (e.g., in millimeters or fractions of an inch) of particles that may be present between two pieces of two adjacent cell isolators (200) in, for example, a battery module.

The thickness being greater than or equal to one half of the maximum dimension may account for the presence of two pieces of two cell isolators being disposed between two adjacent cells. Thus, if a particle having the maximum dimension penetrates the two pieces of two cell isolators disposed between the two adjacent cells, at least one of the two pieces will still electrically isolate the housings of the two adjacent cells. The thickness being greater than one half of the maximum dimension may account for any compression of cell isolators when used in a battery module. Thickness of the first and second pieces 204 and 208 may be selected to satisfy the above relationship, given the maximum dimension for a particular application.

Multiple piece cell isolators may be manufactured more easily and therefore be less expensive than, for example, single piece cell isolators and modular frames with multiple, electrically isolated compartments for cells. Additionally, multiple piece cell isolators may be less expensive than other types of cell isolators, such as electrically insulative epoxies that can be sprayed onto the housing of each cell.

The first piece 204 and/or the second piece 208 is/are formed with a bottom member. For example, the first piece 204 of the cell isolator (200) may be formed with a bottom member 224 that will abut the bottom surface 120 of the cell 100. The second piece 208 of the cell isolator (200) may be formed with a bottom member 228 that will abut a bottom surface of the bottom member 224. In various implementations, only one of the first and second pieces 204 and 208 may be formed with a bottom member. In various implementations, neither of the first and second pieces 204 and 208 may be formed with a bottom member.

The first piece 204 and the second piece 208 may be formed with lip members. For example, the first piece 204 of the cell isolator (200) may be formed with a lip member 232. An inner surface 236 of the lip member 232 may abut a first piece of the top surface 116 of the cell 100. The second piece 208 of the cell isolator (200) may be formed with a lip member 240. An inner surface 244 of the lip member 240 may abut a second portion of the top surface 116 of the cell 100 and a portion of an outer surface of the lip member 232.

According to the invention, the first piece 204 of the cell isolator (200) is fixed to the cell via an adhesive and may be fixed to the cell 100 via an interference fit (e.g., a press fit or a friction fit).

The second piece 208 of the cell isolator (200) may be fixed to the first piece 204 of the cell isolator (200). The second piece 208 of the cell isolator (200) may be fixed to the first piece 204 of the cell isolator (200) after the first piece 204 of the cell isolator (200) has been fixed to the cell 100. The second piece 208 of the cell isolator (200) may be fixed to the first piece 204 of the cell isolator (200) at locations where the first and second pieces 204 and 208 overlap. The second piece 208 may be fixed to the first piece 204, for example, by welding the first and second pieces 204 and 208 (e.g., by laser welding, ultrasonic welding, hot plate welding, etc.), via an adhesive, or in another suitable manner. The second piece 208 may also be fixed to the cell 100, for example, via an adhesive.

In various implementations, the first and second pieces 204 and 208 may be fixed together prior to introduction of the cell 100, and the lip members 232 and 240 may be omitted. The first and second pieces 204 and 208 of the cell isolator (200) may be fixed together prior to introduction of the cell 100, for example, by welding the first and second pieces 204 and 208 (e.g., by laser welding, ultrasonic welding, hot plate welding, etc.), via an adhesive, or in another suitable manner. The cell 100 may be inserted into the cell isolator (200) via an interference fit (e.g., a press fit or a friction fit) between the cell isolator (200) formed by the first and second pieces 204 and 208 and the cell 100.

The cell 100 and the cell isolator (200) can be combined with one or more other cells and one or more other cell isolators in a battery module. The cell isolators electrically isolate the housings of the cells from each other.

The scope of the present invention is defined by the claims. The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. For purposes of clarity, the same reference numbers will be used in the drawings to identify similar elements. As used herein, the phrase at least one of A, B, and C should be construed to mean a logical (A or B or C), using a non-exclusive logical OR. It should be understood that one or more steps within a method may be executed in different order (or concurrently) without altering the principles of the present disclosure.

As used herein, the term module may refer to, be part of, or include an Application Specific Integrated Circuit (ASIC); an electronic circuit; a combinational logic circuit; a field programmable gate array (FPGA); a processor (shared, dedicated, or group) that executes code; other suitable hardware components that provide the described functionality; or a combination of some or all of the above, such as in a system-on-chip. The term module may include memory (shared, dedicated, or group) that stores code executed by the processor.

**Claims**

1. A battery assembly comprising:

    a first lithium ion cell (100) that includes a positive terminal (108), that includes a negative terminal (108), and that includes an electrically conductive can housing (104) that encloses the first lithium ion cell (100) and that:

        includes a top surface (116) and a bottom surface (120); and
        includes first, second, third, and fourth side surfaces (136, 140, 144, 148) that are perpendicular to the top and bottom surfaces (116, 120), the first and second side surfaces (136, 140) arranged opposite one another,
        wherein the positive and negative terminals (108) extend from the top surface (116) of the can housing (104);

    a cell isolator (200) constructed of two or more individual isolator pieces, which include a first piece (204) and a second piece (208),
    wherein the first piece (204):

        is made of an electrically non-conductive material;
        includes a first wall member (221) that completely covers and directly contacts the first side surface (136);
        includes a second wall member (222) that is perpendicular to the first wall member (221) and that directly contacts a first area of the third side surface (144); and
        includes a third wall member (223) that is perpendicular to the first wall member (221) and that directly contacts a first area of the fourth side surface (148);

    wherein the second piece (208):

        is made of the electrically non-conductive material;
        includes a fourth wall member (225) that completely covers and directly contacts the second side surface (140);
        includes a fifth wall member (226) that is perpendicular to the fourth wall member (225) and that directly contacts a portion of the second wall member (222); and
        includes a sixth wall member (227) that is perpendicular to the fourth wall member (225) and that directly contacts a portion of the third wall member (223),

    wherein an inner surface (212) of the first piece (204) of the cell isolator (200) is fixed directly to an outer surface of the can housing (104) of the first lithium ion cell (100) by an adhesive, and wherein the first piece (204) and/or the second piece (208) is formed with a bottom member that abuts the bottom surface (120).

2. The battery assembly of claim 1 wherein the first and second pieces (204, 208) are formed from polypropylene.

3. The battery assembly of claim 1 wherein the can housing (104) of the lithium ion cell (100) is electrically connected to the positive terminal (108) or the negative terminal (108).

4. The battery assembly of claim 1 wherein the first piece (204) further includes a seventh wall member (224) that forms the bottom member and directly contacts the bottom surface (120).

5. The battery assembly of claim 4 wherein the seventh wall member (224) is perpendicular to the first, second, and third wall members (221, 222, 223).

6. The battery assembly of claim 4 wherein the first piece (204) further includes an eighth wall member (232) that directly contacts a portion of the top surface (116).

7. The battery assembly of claim 6 wherein the eighth wall member (232) is perpendicular to the first, second, and third wall members (221, 222, 223).

8. The battery assembly of claim 6 wherein the second piece (208) further includes a ninth wall member (240) having an inner surface (244) that directly contacts a second portion of the top surface (116).

9. The battery assembly of claim 8 wherein the inner surface (244) of the ninth wall member (240) further directly contacts a portion of an outer surface (220) of the eighth wall member (232).

10. The battery assembly of claim 9 wherein the second piece (208) further includes a tenth wall member (228) having an inner surface (216) that directly contacts an exterior surface of the seventh wall member (224).

11. The battery assembly of claim 10 wherein the tenth wall member (228) is perpendicular to the fourth, fifth, and sixth wall members (225, 226 227).

12. The battery assembly of claim 11 wherein the ninth wall member (240) is perpendicular to the fourth, fifth, and sixth wall members (225, 226 227).

13. The battery assembly of claim 1 wherein the second piece (208) is fixed to the can housing (104) of the lithium ion cell (100) and to the first piece (204) by an adhesive.

**Patentansprüche**

1. Batterieanordnung, umfassend:
eine erste Lithium-Ionen-Zelle (100), die einen Plusanschluss (108) umfasst, die einen Minusanschluss (108) umfasst, und die ein elektrisch leitendes Dosengehäuse (104) umfasst, das die erste Lithium-Ionen-Zelle (100) umschließt und das:

eine obere Fläche (116) und eine untere Fläche (120) umfasst; und
erste, zweite, dritte und vierte Seitenflächen (136, 140, 144, 148) umfasst, die senkrecht zu den oberen und unteren Flächen (116, 120) stehen, wobei die ersten und zweiten Seitenflächen (136, 140) einander gegenüberliegend angeordnet sind,
wobei sich die Plus- und Minusanschlüsse (108) von der oberen Fläche (116) des Dosengehäuses (104) erstrecken;
einen Zellenisolator (200), der aus zwei oder mehr einzelnen Isolatorteilen konstruiert ist, die ein erstes Teil (204) und ein zweites Teil (208) umfassen, wobei das erste Teil (204):

aus einem elektrisch nicht leitenden Material besteht;
ein erstes Wandelement (221) umfasst, das die erste Seitenfläche (136) vollständig bedeckt und mit dieser direkt in Kontakt steht;
ein zweites Wandelement (222) umfasst, das senkrecht zu dem ersten Wandelement (221) steht und das mit einem ersten Bereich der dritten Seitenfläche (144) direkt in Kontakt steht; und
ein drittes Wandelement (223) umfasst, das senkrecht zu dem ersten Wandelement (221) steht und das mit einem ersten Bereich der vierten Seitenfläche (148) direkt in Kontakt steht;
wobei das zweite Teil (208):

aus dem elektrisch nicht leitenden Material besteht;
ein viertes Wandelement (225) umfasst, das die zweite Seitenfläche (140) vollständig bedeckt und mit dieser direkt in Kontakt steht;
ein fünftes Wandelement (226) umfasst, das senkrecht zu dem vierten Wandelement (225) steht und das mit einem Abschnitt des zweiten Wandelements (222) direkt in Kontakt steht; und
ein sechstes Wandelement (227) umfasst, das senkrecht zu dem vierten Wandelement (225) steht und das mit einem Abschnitt des dritten Wandelements (223) direkt in Kontakt steht,
wobei eine Innenfläche (212) des erstes Teils (204) des Zellenisolators (200) direkt an einer Außenfläche des Dosengehäuses (104) der ersten Lithium-Ionen-Zelle (100) durch einen Klebstoff fixiert ist, und
wobei das erste Teil (204) und/oder das zweite Teil (208) mit einem unteren Element ausgebildet ist, das an der unteren Fläche (120) anliegt.

2. Batterieanordnung nach Anspruch 1, wobei die ersten und zweiten Teile (204, 208) aus Polypropylen ausgebildet sind.

3. Batterieanordnung nach Anspruch 1, wobei das Dosengehäuse (104) der Lithium-Ionen-Zelle (100) elektrisch mit dem Plusanschluss (108) oder dem Minusanschluss (108) verbunden ist.

4. Batterieanordnung nach Anspruch 1, wobei das erste Teil (204) ferner ein siebtes Wandelement (224) umfasst, das das unteren Element ausbildet und direkt mit der unteren Fläche (120) in Kontakt steht.

5. Batterieanordnung nach Anspruch 4, wobei das siebte Wandelement (224) senkrecht zu den ersten, zweiten und dritten Wandelementen (221, 222, 223) steht.

6. Batterieanordnung nach Anspruch 4, wobei das erste Teil (204) ferner ein achtes Wandelement (232) umfasst, das direkt mit einem Abschnitt der oberen Fläche (116) in Kontakt steht.

7. Batterieanordnung nach Anspruch 6, wobei das achte Wandelement (232) senkrecht zu den ersten, zweiten und dritten Wandelementen (221, 222, 223) steht.

8. Batterieanordnung nach Anspruch 6, wobei das zweite Teil (208) ferner ein neuntes Wandelement (240) umfasst, das eine Innenfläche (244) aufweist, die direkt mit einem zweiten Abschnitt der oberen Fläche (116) in Kontakt steht.

9. Batterieanordnung nach Anspruch 8, wobei die Innenfläche (244) des neunten Wandelements (240) ferner direkt mit einem Abschnitt einer Außenfläche (220) des achten Wandelements (232) in Kontakt steht.

10. Batterieanordnung nach Anspruch 9, wobei das zweite Teil (208) ferner ein zehntes Wandelement (228) umfasst, das eine Innenfläche (216) aufweist, die direkt mit einer Außenfläche des siebten Wandelements (224) in Kontakt steht.

11. Batterieanordnung nach Anspruch 10, wobei das zehnte Wandelement (228) senkrecht zu den vierten, fünften und sechsten Wandelementen (225, 226, 227) steht.

12. Batterieanordnung nach Anspruch 11, wobei das neunte Wandelement (240) senkrecht zu den vierten, fünften und sechsten Wandelementen (225, 226, 227) steht.

13. Batterieanordnung nach Anspruch 1, wobei das zweite Teil (208) an dem Dosengehäuse (104) der Lithium-Ionen-Zelle (100) und an dem ersten Teil (204) durch einen Klebstoff fixiert ist.

## Revendications

1. Ensemble batterie, comprenant :
une première cellule au lithium-ion (100) qui inclut une borne positive (108), qui inclut une borne négative (108), et qui inclut un boîtier métallique électroconducteur (104) qui enferme la première cellule au lithium-ion (100) et qui :

   inclut une surface supérieure (116) et une surface inférieure (120) ; et
   inclut des première, deuxième, troisième, et quatrième surfaces latérales (136, 140, 144, 148) qui sont perpendiculaires aux surfaces supérieure et inférieure (116, 120), les première et deuxième surfaces latérales (136, 140) étant agencées en face l'une de l'autre, dans lequel les bornes positive et négative (108) s'étendent depuis la surface supérieure (116) du boîtier métallique (104) ;
   un isolateur de cellule (200) construit de deux, ou plus, pièces d'isolateur individuelles, qui incluent une première pièce (204) et une seconde pièce (208), dans lequel la première pièce (204) :

      est faite d'un matériau non électroconducteur ;
      inclut un premier élément de paroi (221) qui couvre complètement et entre directement en contact avec la première surface latérale (136) ;
      inclut un deuxième élément de paroi (222) qui est perpendiculaire au premier élément de paroi (221) et qui entre directement en contact avec une première zone de la troisième surface latérale (144) ; et
      inclut un troisième élément de paroi (223) qui est perpendiculaire au premier élément de paroi (221) et qui entre directement en contact avec une première zone de la quatrième surface latérale (148) ;
      dans lequel la seconde pièce (208) :

         est faite du matériau non électroconducteur ;
         inclut un quatrième élément de paroi (225) qui couvre complètement et entre directement en contact avec la seconde surface latérale (140) ;
         inclut un cinquième élément de paroi (226) qui est perpendiculaire au quatrième élément de paroi (225) et qui entre directement en contact avec une partie du deuxième élément de paroi (222) ; et
inclut un sixième élément de paroi (227) qui est perpendiculaire au quatrième élément de paroi (225) et
qui entre directement en contact avec une partie du troisième élément de paroi (223),
dans lequel une surface intérieure (212) de la première pièce (204) de l'isolateur de cellule (200) est fixée directement à une surface extérieure du boîtier métallique (104) de la première cellule au lithium-ion (100) par un adhésif, et
dans lequel la première pièce (204) et/ou la seconde pièce (208) sont formées avec un élément inférieur qui jouxte la surface inférieure (120).

**2.** Ensemble batterie selon la revendication 1, dans lequel les première et seconde pièces (204, 208) sont formées de polypropylène.

**3.** Ensemble batterie selon la revendication 1, dans lequel le boîtier métallique (104) de la cellule au lithium-ion (100) est électriquement connecté à la borne positive (108) ou la borne négative (108).

**4.** Ensemble batterie selon la revendication 1, dans lequel la première pièce (204) inclut en outre un septième élément de paroi (224) qui forme l'élément inférieur et entre directement en contact avec la surface inférieure (120).

**5.** Ensemble batterie selon la revendication 4 dans lequel le septième élément de paroi (224) est perpendiculaire aux premier, deuxième, et troisième éléments de paroi (221, 222, 223).

**6.** Ensemble batterie selon la revendication 4, dans lequel la première pièce (204) inclut en outre un huitième élément de paroi (232) qui entre directement en contact avec une partie de la surface supérieure (116) .

**7.** Ensemble batterie selon la revendication 6, dans lequel le huitième élément de paroi (232) est perpendiculaire aux premier, deuxième, et troisième éléments de paroi (221, 222, 223).

**8.** Ensemble batterie selon la revendication 6, dans lequel la seconde pièce (208) inclut en outre un neuvième élément de paroi (240) ayant une surface intérieure (244) qui entre directement en contact avec une seconde partie de la surface supérieure (116).

**9.** Ensemble batterie selon la revendication 8, dans lequel la surface intérieure (244) du neuvième élément de paroi (240) en outre entre directement en contact avec une partie d'une surface extérieure (220) du huitième élément de paroi (232).

**10.** Ensemble batterie selon la revendication 9, dans lequel la seconde pièce (208) inclut en outre un dixième élément de paroi (228) ayant une surface intérieure (216) qui entre directement en contact avec une surface extérieure du septième élément de paroi (224) .

**11.** Ensemble batterie selon la revendication 10, dans lequel le dixième élément de paroi (228) est perpendiculaire aux quatrième, cinquième, et sixième éléments de paroi (225, 226, 227).

**12.** Ensemble batterie selon la revendication 11, dans lequel le neuvième élément de paroi (240) est perpendiculaire aux quatrième, cinquième, et sixième éléments de paroi (225, 226, 227).

**13.** Ensemble batterie selon la revendication 1, dans lequel la seconde pièce (208) est fixée au boîtier métallique (104) de la cellule au lithium-ion (100) et à la première pièce (204) par un adhésif.

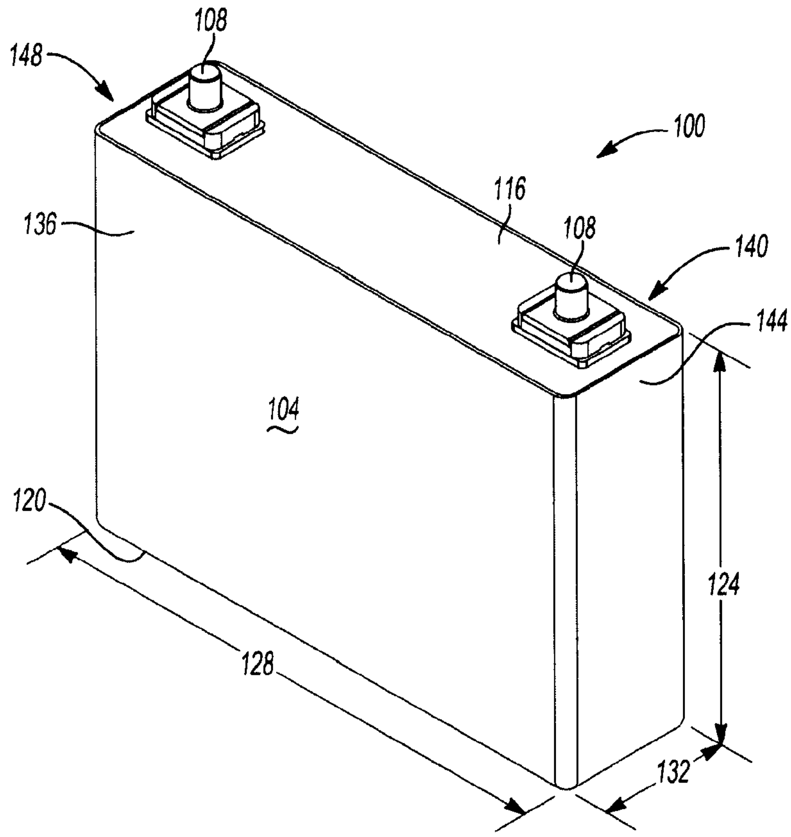


Fig-1

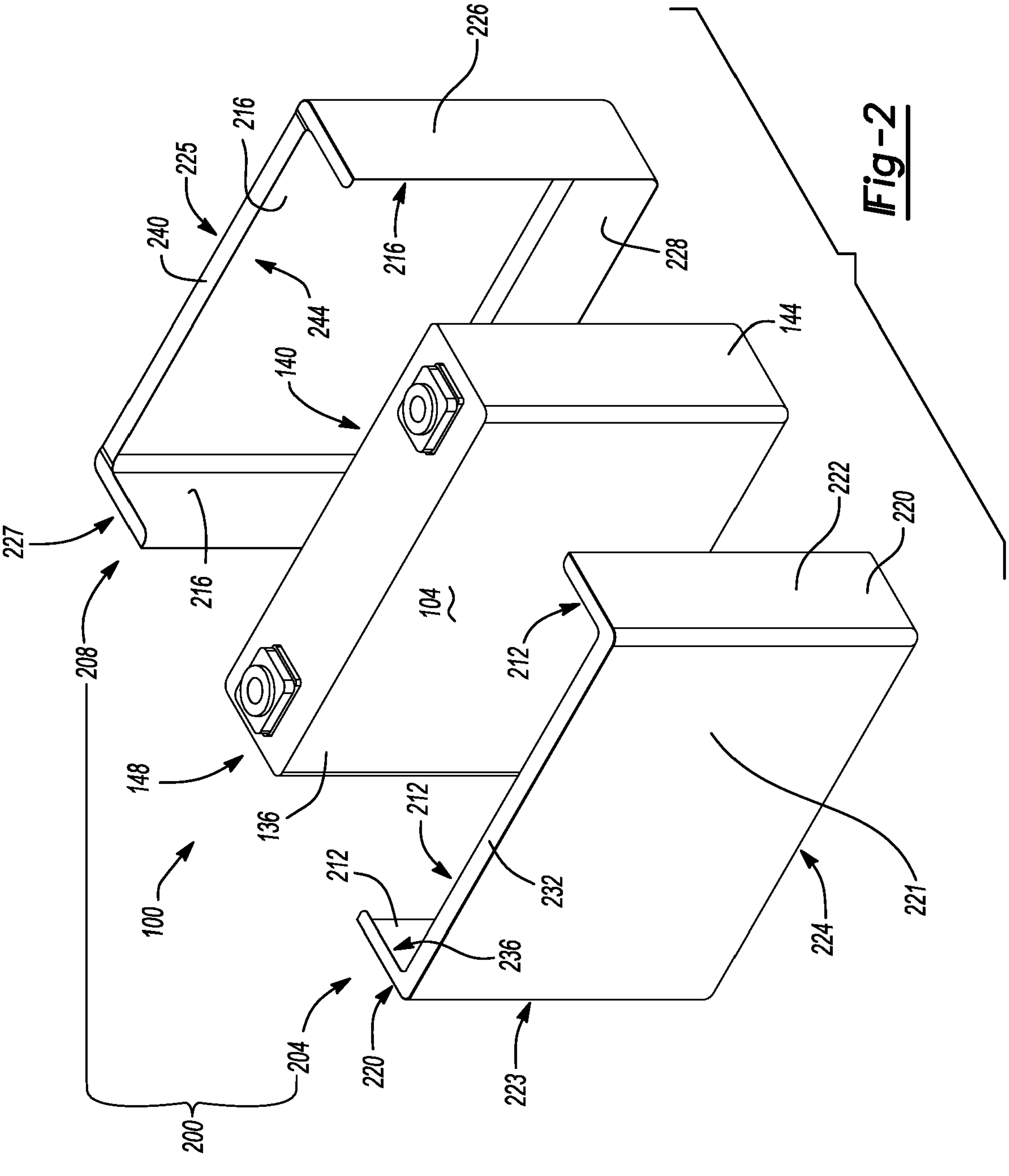
226
216
225
240
216
244
216
228
140
144
227
216
208
104
222
220
212
148
136
212
232
212
100
236
224
221
204
220
223
200

Fig-2

2

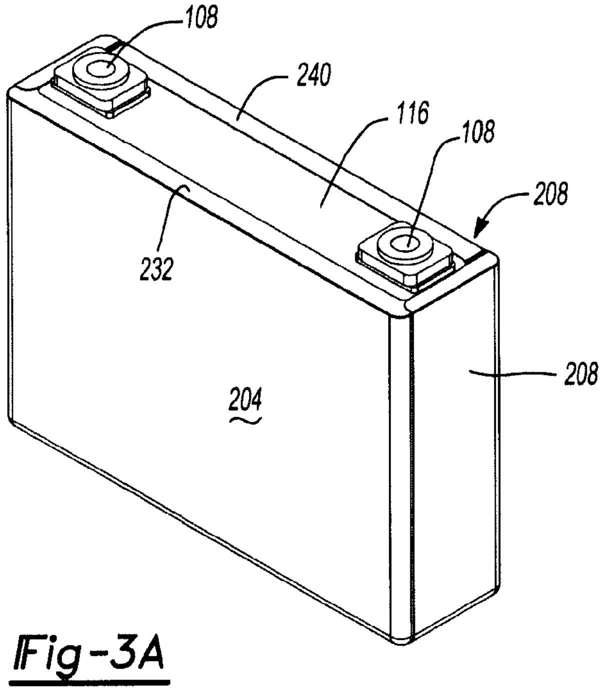


Fig-3A

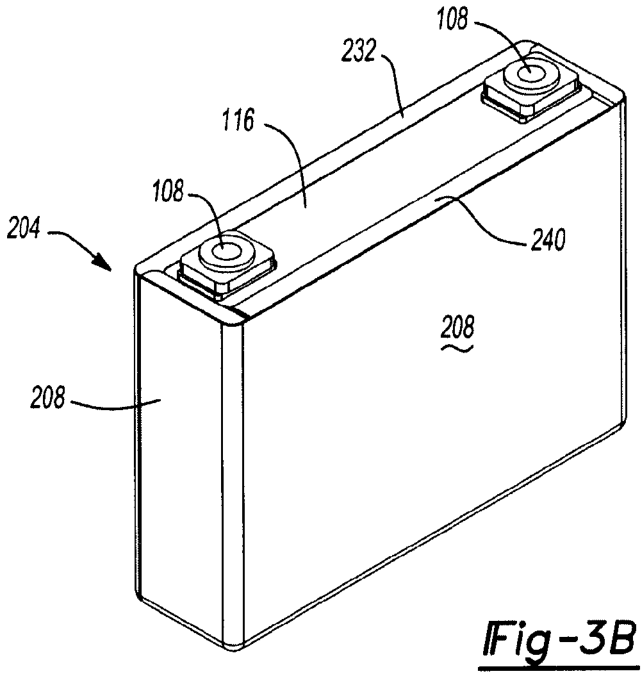


Fig-3B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5704803 A
- CN 100344012 C
- US 20090208835 A1
- US 5543248 A
- JP 2012069337 A
- JP 2006120419 A
- US 20110195301 A1
- US 20100323238 A1
- US 2011318635 A1
- US 2005208345 A1